(19) Europäisches Patentamt
European Patent Office
Office européen des brevets

(11) **EP 4 080 796 A1**

(12) **EUROPEAN PATENT APPLICATION**
published in accordance with Art. 153(4) EPC

(43) Date of publication:
**26.10.2022 Bulletin 2022/43**

(21) Application number: **19956380.0**

(22) Date of filing: **20.12.2019**

(51) International Patent Classification (IPC):
*H04J 13/18* (2011.01)    *H04L 27/26* (2006.01)

(52) Cooperative Patent Classification (CPC):
**H04J 13/18; H04L 27/26**

(86) International application number:
**PCT/JP2019/050220**

(87) International publication number:
**WO 2021/124586 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
- **OKAMURA, Masaya**
  **Tokyo 100-6150 (JP)**
- **MATSUMURA, Yuki**
  **Tokyo 100-6150 (JP)**
- **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, AND RADIO COMMUNICATION METHOD**

(57) A terminal according to one aspect of the present disclosure includes a control section that assumes that, in a case where time domain orthogonal cover code (TD-OCC) is configured for consecutive symbols of a sounding reference signal (SRS), the same sequence is configured to the consecutive symbols of the SRS, and a transmitting and/or receiving section that performs at least one of transmission processing and reception processing of the SRS, based on the TD-OCC. According to one aspect of the present disclosure, reduction in SRS capacity can be suppressed.

FIG. 9A

**(Cont. next page)**

EP 4 080 796 A1

FIG. 9B

| | FIRST SYMBOL OF SAME SEQUENCE | SECOND SYMBOL OF SAME SEQUENCE |
|---|---|---|
| $W_{2,1}$ | 1 | 1 |
| $W_{2,2}$ | 1 | -1 |

**Description**

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (such as Physical Uplink Shared Channel (PUSCH)) and a UL control channel (such as Physical Uplink Control Channel (PUCCH)).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In 3GPP Rel. 15, in order to improve coverage of SRS, repetition of SRS is supported. However, employing repetition of SRS causes reduction in SRS capacity. The reduction in SRS capacity may be suppressed by applying a time domain orthogonal cover code (TD-OCC) to the SRS.

Nevertheless, studies of various kinds of configurations relating to application of the TD-OCC to the SRS are not sufficiently advanced. Unless application of the TD-OCC to the SRS is appropriately configured, it is difficult to suppress reduction in SRS capacity. This means inefficient use of the resource of the SRS.

In the light of this, the present disclosure has one object to provide a terminal and a radio communication method capable of efficiently using a resource of an SRS.

Solution to Problem

A terminal according to one aspect of the present disclosure includes a control section that assumes that, in a case where time domain orthogonal cover code (TD-OCC) is configured for consecutive symbols of a sounding reference signal (SRS), the same sequence is configured to the consecutive symbols of the SRS, and a transmitting and/or receiving section that performs at least one of transmission processing and reception processing of the SRS, based on the TD-OCC.

Advantageous Effects of Invention

According to one aspect of the present disclosure, the resource of the SRS can be efficiently used.

Brief Description of Drawings

FIG. 1 is a diagram to show an example of configuration contents of a TD-OCC for each SRS resource in accordance with RRC;
FIG. 2 is a diagram to show an example of configuration contents of the TD-OCC for each SRS resource set in accordance with RRC;

FIG. 3 is a diagram to show an example of configuration contents of sequence hopping, group hopping, and frequency hopping in accordance with RRC;

FIG. 4 is a diagram to show configuration examples of a sequence for consecutive symbols to which the TD-OCC is configured;

FIG. 5 is a diagram to show a first example of a sequence configuration for each symbol of consecutive symbols to which the TD-OCC is configured;

FIG. 6 is a diagram to show a second example of a sequence configuration for each symbol of consecutive symbols to which the TD-OCC is configured;

FIG. 7 is a diagram to show a third example of a sequence configuration for each symbol of consecutive symbols to which the TD-OCC is configured;

FIG. 8 is a diagram to show a fourth example of a sequence configuration for each symbol of consecutive symbols to which the TD-OCC is configured;

FIG. 9A is a diagram to show application of the TD-OCC in a case where sequence hopping is not performed among consecutive symbols (the number of symbols = 2); FIG. 9B is a diagram to show configuration examples of the TD-OCC in a case where the number of symbols of a sequence is 2;

FIG. 10A is a diagram to show application of the TD-OCC in a case where sequence hopping is not performed among consecutive symbols (the number of symbols = 4); FIG. 10B is a diagram to show configuration examples of the TD-OCC in a case where the number of symbols of a sequence is 4;

FIG. 11A is a diagram to show application of the TD-OCC in a case where sequence hopping is performed among consecutive symbols (the number of symbols = 4); FIG. 11B is a diagram to show configuration examples of a TD-OCC index in a case where the number of symbols of a sequence is 2;

FIG. 12 is a diagram to show application of the TD-OCC among slots;

FIG. 13 is a diagram to show an example of appropriate use of an intra-slot OCC and an inter-slot;

FIG. 14 is a diagram to show an example in which an OCC index is configured to each SRS resource in RRC;

FIG. 15A is a diagram to show an example in which an OCC index per SRS resource is configured by 1 parameter in RRC; FIG. 15B is a diagram to show correspondence relationships between OCC indices and OCCs of symbols;

FIG. 16 is a diagram to show a first example of cyclic shift used in the TD-OCC;

FIG. 17 is a diagram to show a second example of cyclic shift used in the TD-OCC;

FIG. 18 is a diagram to show an example of a schematic structure of a radio communication system according to one embodiment;

FIG. 19 is a diagram to show an example of a structure of a base station according to one embodiment;

FIG. 20 is a diagram to show an example of a structure of a user terminal according to one embodiment; and

FIG. 21 is a diagram to show an example of a hardware structure of the base station and the user terminal according to one embodiment.

Description of Embodiments

(SRS)

In NR, sounding reference signal (SRS) is variously used. The SRS in NR is used not only for CSI measurement of uplink (UL), which is utilized in existing LTEs (LTE Rel. 8 to Rel. 14), but also for CSI measurement of downlink (DL), beam management, etc.

One or a plurality of SRS resources may be configured to a UE. The SRS resource may be identified by an SRS resource index (SRI).

Each SRS resource may have one or a plurality of SRS ports (may correspond to one or a plurality of SRS ports). For example, the number of ports of each SRS may be 1, 2, 4, or the like.

One or a plurality of SRS resource sets may be configured to the UE. One SRS resource set may relate to a certain number of SRS resources. The UE may use a common higher layer parameter, as to an SRS resource contained in one SRS resource set. Note that a "resource set" in the present disclosure may be interpreted as a "set," a "resource group," a "group," and so on.

Information relating to the SRS resource or the resource set may be configured to the UE by using higher layer signaling, physical layer signaling (for example, downlink control information (DCI)), or a combination thereof.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

SRS configuration information (such as an RRC information element "SRS-Config") may contain SRS resource set configuration information, SRS resource configuration information, and so on.

The SRS resource set configuration information (such as an RRC parameter "SRS-ResourceSet") may contain an SRS resource set ID (Identifier) (SRS-ResourceSetId), a list of SRS resource IDs (SRS-ResourceId) used in the resource set, an SRS resource type, information of usage of SRS, and so on.

Herein, the SRS resource type may show any one of a periodic SRS (P-SRS), a semi-persistent SRS (SP-SRS), and an aperiodic SRS (A-SRS). Note that the UE may periodically transmit a P-SRS and an SP-SRS (or may periodically transmit a P-SRS and an SP-SRS after they are activated). The UE may transmit an A-SRS based on an SRS request of DCI.

Usage of the SRS (an RRC parameter "usage," an L1 (Layer-1) parameter "SRS-SetUse") may be, for example, beam management, codebook, non-codebook, and antenna switching. The SRS for use in codebook or non-codebook may be used to determine a precoder of codebook or non-codebook based uplink shared channel (Physical Uplink Shared Channel (PUSCH)) transmission based on the SRI.

The SRS for use in beam management may be assumed such that only one SRS resource of each SRS resource set is able to be transmitted at a certain time instant. Note that a plurality of SRS resources that belong to mutually different SRS resource sets may be transmitted simultaneously.

The SRS resource configuration information (such as an RRC parameter "SRS-Resource") may contain information relating to an SRS resource ID (SRS-ResourceId), a number of SRS ports, an SRS port number, transmission comb, SRS resource mapping (such as time and/or frequency resource position, resource offset, resource periodicity, number of repetitions, number of SRS symbols, and SRS bandwidth), hopping, an SRS resource type, a sequence ID, a spatial relation, and so on.

The UE may transmit SRS in adjacent symbols in the number of SRS symbols among last six symbols in one slot. Note that the number of SRS symbols may be 1, 2, 4, or the like.

The UE may switch BWPs (Bandwidth Parts) on which SRS is transmitted or switch antennas, with respect to each slot. The UE may employ at least one of intra-slot hopping and inter-slot hopping in SRS transmission.

The number of multiplexing in a frequency direction may be 12 in a case of using cyclic shift and may be 4 in a case of using comb.

In 3GPP Rel. 15, in order to improve coverage of SRS, repetition of SRS is supported. However, employing repetition of SRS causes reduction in SRS capacity. In view of this, the reduction in SRS capacity may be suppressed by applying a time domain orthogonal cover code (TD-OCC) to the SRS.

Nevertheless, studies of various kinds of configurations relating to application of the TD-OCC to the SRS are not sufficiently advanced. Unless application of the TD-OCC to the SRS is appropriately configured, it is difficult to suppress reduction in SRS capacity.

In the light of this, the inventors of the present invention came up with the idea of a terminal including a control section and a transmitting/receiving section. The control section determines, based on SRS configuration information, whether a TD-OCC is enabled or disabled for consecutive symbols of the SRS. The transmitting/receiving section performs at least one of transmission processing and reception processing of the SRS based on the TD-OCC in response to determination that the TD-OCC is enabled. According to one aspect of the present disclosure, reduction in SRS capacity can be suppressed.

Moreover, the inventors of the present invention also came up with the idea of a terminal including a control section and a transmitting/receiving section. The control section assumes that, in a case where a TD-OCC is configured for consecutive symbols of an SRS, the same sequence is configured to the consecutive symbols of the SRS. The transmitting/receiving section performs at least one of transmission processing and reception processing of the SRS based on the TD-OCC. According to one aspect of the present disclosure, reduction in SRS capacity can be suppressed.

Embodiments according to the present disclosure will be described in detail with reference to the drawings. The radio communication methods according to the embodiments may be employed independently or may be employed in combination. In the present disclosure, a phrase "A/B" may be interpreted as a phrase "at least one of A and B."

(Radio Communication Methods)

<First Embodiment>

In the First Embodiment, a UE receives SRS configuration information (SRS-Config) and determines, based on this information, whether a TD-OCC is enabled or disabled for consecutive symbols (intra-slot repetition) of the SRS. Upon determining that the TD-OCC is enabled (the TD-OCC is applied), the UE performs transmission processing or reception processing of the SRS based on the TD-OCC (applies the TD-OCC).

[Method 1-1]

In the case where the SRS configuration information shows that the TD-OCC is enabled, the UE may receive (configure) an index of the TD-OCC by using higher layer signaling.

The UE may receive information relating to a configuration of the TD-OCC (information showing whether the TD-OCC is enabled or disabled) by using higher layer signaling. The information showing whether the TD-OCC is enabled or disabled may use, for example, a value showing enabling, a value showing disabling, or a value showing enabling and disabling. The enabling or disabling of the TD-OCC may be configured in higher layer signaling per SRS resource, SRS resource set, UE, Component Carrier (CC), or Bandwidth part (BWP).

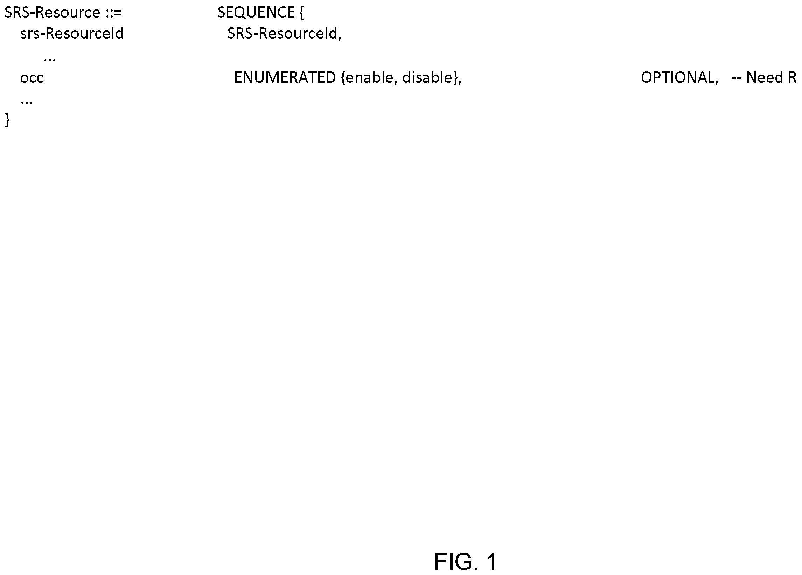

FIG. 1 is a diagram to show an example of configuration contents of the TD-OCC for each SRS resource in accordance with RRC. In the example shown in FIG. 1, an SRS resource identifier (srs-ResourceId), and enabling or disabling of the TD-OCC (occ), are configured in the SRS resource configuration information (SRS-Resource information elements).

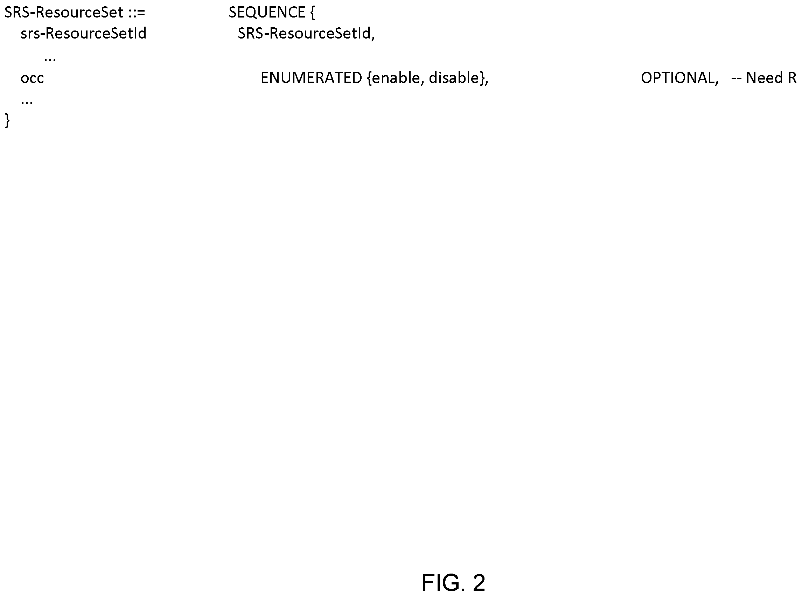

FIG. 2 is a diagram to show an example of configuration contents of the TD-OCC for each SRS resource set in accordance with RRC. In the example shown in FIG. 2, an SRS resource set identifier (srs-ResourceSetId), and enabling or disabling of the TD-OCC (occ), are configured in the SRS resource set configuration information (SRS-ResourceSet information elements).

In the case where enabling or disabling of the TD-OCC is configured to each UE, CC, or BWP, information (such as identifier) showing a UE, a CC, or a BWP and information showing that the TD-OCC is enabled or disabled, may be configured, as in the examples shown in FIGS. 1 and 2.

In the Method 1-1, using higher layer signaling enables a Network (NW) (such as a base station) to flexibly configure the TD-OCC.

[Method 1-2]

The UE may receive SRS configuration information that implicitly shows whether the TD-OCC is enabled or disabled by using higher layer signaling and may assume (determine), based on this information, whether the TD-OCC is enabled or disabled. For example, whether the TD-OCC is enabled or disabled is implicitly shown to the UE by sequence hopping, group hopping, or frequency hopping. That is, the UE assumes (determines) whether the TD-OCC is enabled or disabled, based on the configuration relating to sequence hopping, group hopping, or frequency hopping in the SRS configuration information.

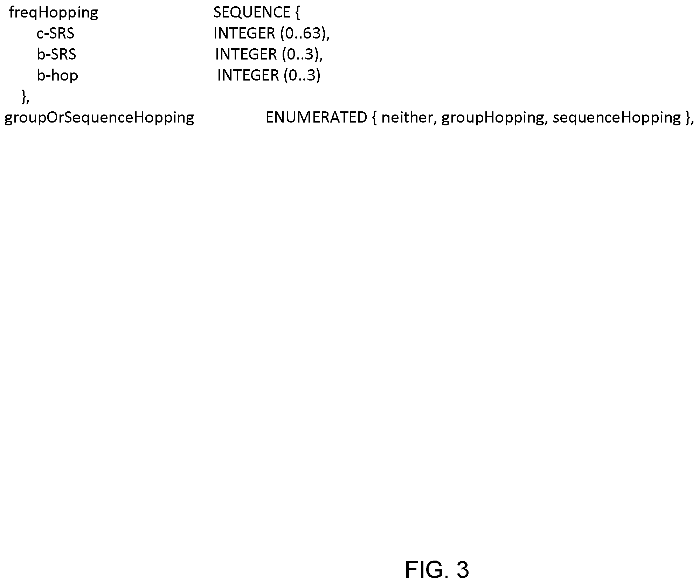

FIG. 3 is a diagram to show examples of configuration contents of sequence hopping, group hopping, and frequency hopping in accordance with RRC. The following describes the Method 1-2 by using the examples in FIG. 3. Note that, in the present disclosure, the phrases "it is determined that the TD-OCC is enabled" and "the TD-OCC is applied" may be interchangeably interpreted. In addition, the phrases "it is determined that the TD-OCC is disabled" and "the TD-OCC is not applied" may be interchangeably interpreted.

(Method 1-2-1)

The UE may determine whether the TD-OCC is enabled or disabled, based on the configuration of sequence hopping in the RRC parameter. For example, the sequence hopping is configured by the parameter groupOrSequence-Hopping shown in FIG. 3 as groupOrSequenceHopping = sequenceHopping. For example, the UE may apply the TD-OCC in the case where the sequence hopping is not configured in the RRC.

In the case where the sequence hopping is configured in the RRC and the number of SRS REs in the frequency direction is a certain number (for example, 72) or larger, the UE may not apply the TD-OCC. Otherwise, the UE may apply the TD-OCC. That is, in the case where the sequence hopping is configured in the RRC and the number of SRS REs in the frequency direction is less than a certain number (for example, 72), the UE may apply the TD-OCC. This certain number may be configured to the UE by higher layer signaling or may be defined by specifications in advance.

(Method 1-2-2)

The UE may determine whether the TD-OCC is enabled or disabled, based on the configuration of group hopping in the RRC parameter. For example, the group hopping is configured by the parameter groupOrSequenceHopping shown in FIG. 3 as groupOrSequenceHopping = groupHopping. For example, the UE may apply the TD-OCC in the case where the group hopping is not configured in the RRC. The UE may not apply the TD-OCC in the case where the group hopping is configured in the RRC.

(Method 1-2-3)

The UE may determine whether the TD-OCC is enabled or disabled, based on the configuration of frequency hopping in the RRC parameter. The frequency hopping is configured by, for example, the parameter freqHopping shown in FIG. 3. The UE may apply the TD-OCC in the case where the RRC has a configuration that the frequency hopping is disabled (for example, an RRC parameter value in the hopping bandwidth of an SRS is an RRC parameter value in the bandwidth of the SRS or greater). The RRC parameter value in the hopping bandwidth of the SRS may be represented as "b-hop," "$b_{hop}$," and so on in Rel. 15. The RRC parameter value in the bandwidth of the SRS may be represented as "b-SRS," "$B_{SRS}$," and so on in Rel. 15.

Note that any one of integers from 0 to 63 is configured to the c-SRS shown in FIG. 3. Any one of integers from 0 to 3 is configured to the b-SRS. Any one of integers from 0 to 3 is configured to the b-hop. The UE may determine the sequence length of the SRS based on the c-SRS. The UE may also determine enabling/disabling of the frequency hopping of the SRS, as described above, based on the b-SRS, b-hop, or the like.

The UE may determine to not apply the TD-OCC, in the case where the RRC has a configuration that the frequency hopping is enabled (for example, an RRC parameter value in the hopping bandwidth of an SRS is less than an RRC parameter value in the bandwidth of the SRS).

Note that the examples in which the RRC shows the information that implicitly shows whether the TD-OCC is enabled or disabled, are illustrated in the Methods 1-2-1 to 1-2-3, this information may be shown by another parameter (MAC CE, or the like).

Information (enabling/disabling) relating to which of the Methods 1-2-1 to 1-2-3 is used to determine the TD-OCC as being enabled or disabled, may be configured to the UE by higher layer signaling (such as RRC signaling or MAC CE) or the like.

The Method 1-2 enables the NW to flexibly configure the TD-OCC. Alternatively, the NW can configure enabling/disabling of the TD-OCC, without using signaling dedicated to the TD-OCC.

The OCC may be applied among symbols on the premise that, in the Method 1-2, an element other than nrofSymbols = {n1} (the number of SRS symbols = 1) is configured, and groupOrSequenceHopping = {groupHopping} or groupOrSequenceHopping = {sequenceHopping} is configured.

The OCC may be applied among slots on the premise that, in the Method 1-2, groupOrSequenceHopping = {groupHopping} or groupOrSequenceHopping = {sequenceHopping} is configured.

[Method 1-3]

The UE may determine whether the TD-OCC is applied to the SRS (whether the TD-OCC is enabled or disabled), based on the number of repetitions (nrofSymbols) of the SRS in a slot, in the SRS configuration information. For example, the UE may determine that the TD-OCC is applied to the SRS (the TD-OCC is enabled) at any time, in the case where the SRS configuration information shows the number of repetitions (nrofSymbols) of the SRS in a slot being a certain number of symbols (for example, 2) or larger. Information (enabling/disabling) relating to determination of enabling or disabling of the TD-OCC based on the number of repetitions of the SRS in a slot, may be configured to the UE by higher layer signaling (such as RRC signaling or MAC CE) or the like.

The Method 1-3 enables the NW to configure enabling/disabling of the TD-OCC, without using signaling dedicated to the TD-OCC.

[Method 1-4]

The UE may assume (determine) that the TD-OCC is enabled in the case where an index (for example, $W_{a,b}$) of the TD-OCC for consecutive symbols (repetition symbols in a slot) of the SRS is configured by higher layer signaling (such as SRS configuration information). In the case where the index of the TD-OCC is not configured, the UE may assume (determine) that the TD-OCC is disabled. The index of the TD-OCC may be contained in the SRS configuration information. Configuring the index of the TD-OCC will be described further in the Fourth Embodiment.

<Second Embodiment>

In the Second Embodiment, in the case where the TD-OCC is configured for consecutive symbols (repetition in a slot) of the SRS, the UE receives information relating to configurations of the sequence of the consecutive symbols of the SRS and performs transmission processing or reception processing of the SRS based on the information relating to the configured TD-OCC and sequence.

[Method 2-1]

In the case where the TD-OCC is configured for consecutive symbols, the UE may assume that the same sequence (one sequence) is configured to the consecutive symbols by higher layer signaling (such as RRC or MAC CE) at any time. That is, the UE may receive information relating to one sequence that is configured for the consecutive symbols by the higher layer signaling.

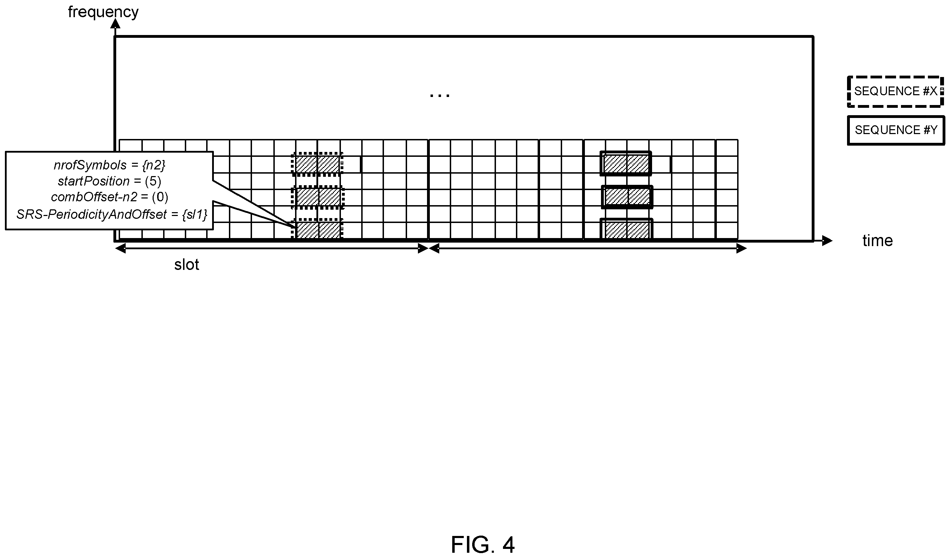

FIG. 4 is a diagram to show configuration examples of a sequence for consecutive symbols to which the TD-OCC is configured. As shown in FIG. 4, sequences #X and #Y are configured to the consecutive symbols, respectively. The sequence may be configured by the NW and may be notified to the UE by higher layer signaling. For example, the UE may determine the sequence of the SRS based on a sequence ID (sequenceId) corresponding to an initial ID of the sequence, which the sequence ID is notified by higher layer signaling. As shown in FIG. 4, one sequence is configured for the consecutive symbols, whereas another sequence is configured for inconsecutive symbols (symbols in a different slot). However, the same (one) sequence may be configured to the inconsecutive symbols.

In the examples shown in FIG. 4, higher layer signaling may configure information relating to the sequence, such as a number of symbols (nrofSymbols), a start position (startPosition), a subcarrier allocation offset (combOffset), SRS periodicity and offset (SRS-PeriodicityAndOffset), and a sequence ID (sequenceId), of the consecutive symbols to which the TD-OCC is configured.

The Method 2-1 uses higher layer signaling to enable the NW to flexibly configure the TD-OCC.

[Method 2-2]

The Method 2-2 will be described by referring to a configuration example of a sequence for each symbol of consecutive symbols of an SRS to which the TD-OCC is configured. The UE may assume (determine) that the same sequence as the sequence of the symbol at a certain (first, Z-th from first, last, or Z-th from last) position is configured to each symbol of the consecutive symbols of the SRS to which the TD-OCC is configured.

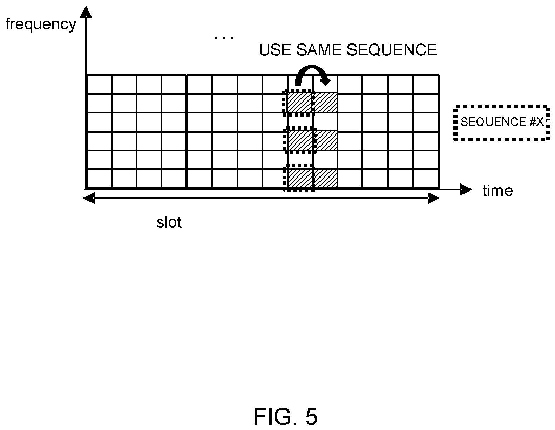

FIG. 5 is a diagram to show a first example of a sequence configuration for each symbol of consecutive symbols to which the TD-OCC is configured. In the example shown in FIG. 5, the sequence (sequence #X) of the first symbol of the consecutive symbols, to which the TD-OCC is configured, is applied to each symbol of the consecutive symbols.

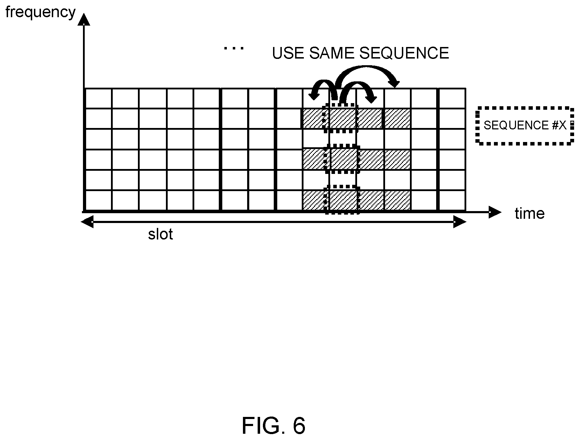

FIG. 6 is a diagram to show a second example of a sequence configuration for each symbol of consecutive symbols to which the TD-OCC is configured. In the example shown in FIG. 6, the sequence (sequence #X) of the symbol at a certain (Z-th from first) position of the consecutive symbols, to which the TD-OCC is configured, is applied to each symbol of the consecutive symbols.

In the example of FIG. 6, information showing the certain position (position Z from the first position) may be configured by higher layer signaling, Downlink Control Information (DCI), or the like, or may be defined by specifications. The certain position may be judged by the UE in accordance with the length of the consecutive symbols (the number of symbols). In one example where the length of the consecutive symbols is 2, the UE may judge the certain position (Z) as being 1. In another example where the length of the consecutive symbols is 4, the UE may judge the certain position (Z) as being 2.

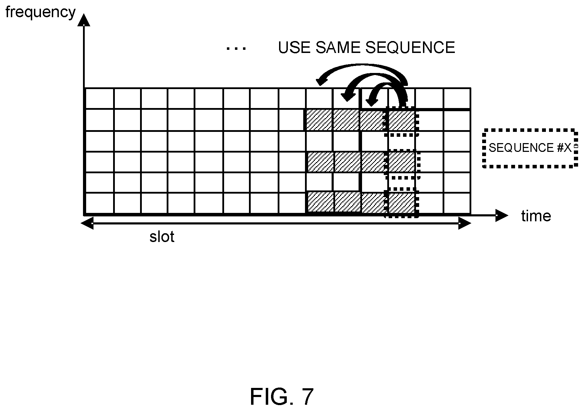

FIG. 7 is a diagram to show a third example of a sequence configuration for each symbol of consecutive symbols to which the TD-OCC is configured. In the example shown in FIG. 7, the sequence of the last symbol of the consecutive symbols, to which the TD-OCC is configured, is applied to each symbol of the consecutive symbols.

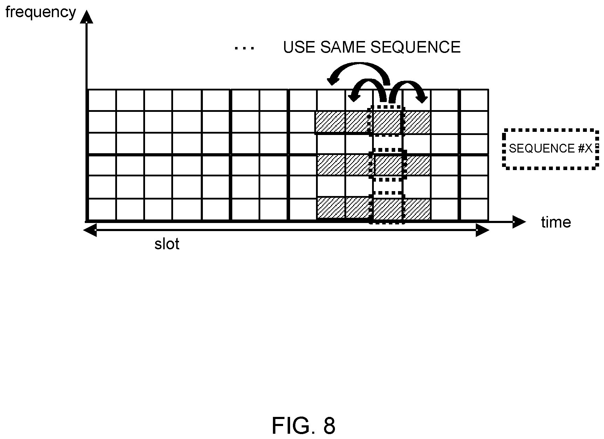

FIG. 8 is a diagram to show a fourth example of a sequence configuration for each symbol of consecutive symbols to which the TD-OCC is configured. In the example shown in FIG. 8, the sequence of the symbol at a certain (Z-th from the last symbol) position of the consecutive symbols, to which the TD-OCC is configured, is applied to each symbol of the consecutive symbols.

In the example of FIG. 8, the information showing the certain position (position Z from the first position) may be configured by higher layer signaling, DCI, or the like, or may be defined by specifications. The certain position may be judged by the UE in accordance with the length of the consecutive symbols (the number of symbols). In one example where the length of the consecutive symbols is 2, the UE may judge the certain position (Z) as being 1. In another example where the length of the consecutive symbols is 4, the UE may judge the certain position (Z) as being 2.

The configuration example to be applied, among the configuration examples shown in FIGS. 5 to 8, may be configured by higher layer signaling (such as RRC or MAC CE). The configurations may be changed by higher layer signaling.

In the examples shown in FIGS. 5 to 8, as in the example shown in FIG. 4, higher layer signaling may configure information relating to the sequence, such as a number of symbols (nrofSymbols), a start position (startPosition), a subcarrier allocation offset (combOffset), SRS periodicity and offset (SRS-PeriodicityAndOffset), and a sequence ID (sequenceId), of the consecutive symbols to which the TD-OCC is configured.

The Method 2-2 dispenses with signaling for selecting the sequence to which the OCC is applied, whereby increase in communication overhead can be suppressed.

[Method 2-3]

In the case where the Method 2-1 or 2-2 is applied (one sequence is configured to consecutive symbols to which the TD-OCC is configured), the UE may assume (determine) whether hopping is enabled or disabled, in accordance with enabling or disabling of frequency hopping for each symbol of the consecutive symbols of the SRS. In the present disclosure, the simply described term "hopping" may be interpreted as "sequence hopping" or "group hopping." The UE may also assume (determine) whether the sequence of each symbol of each symbol of the consecutive symbols of the SRS, based on parameters (for example, $b_{hop}$ and $B_{SRS}$) that are configured by higher layer signaling. For example, the UE may assume any one of the following (1) to (4).

(1) In the case where the frequency hopping is enabled (frequency hopping = enable), the UE may assume that the hopping is disabled (hopping = disable) among the symbols applied with the TD-OCC. In the condition that the parameters $b_{hop}$ and $B_{SRS}$ that are configured by higher layer signaling satisfy $b_{hop} < B_{SRS}$, the UE assumes that the SRS sequence is the same in the symbols applied with the TD-OCC ($f_{gh}(n^{\mu}_{s,f}, l') = 0$, v = 0).

(2) In the case where the frequency hopping is enabled (frequency hopping = enable), the UE may assume that the hopping is enabled (hopping = enable) (the TD-OCC is not applied). For example, in the condition that the parameters $b_{hop}$ and $B_{SRS}$ that are configured by higher layer signaling satisfy $b_{hop} < B_{SRS}$, the UE may assume that the SRS sequences differ among the consecutive symbols (the hopping is performed by using the following formula (1) or (2)). Note that, in the case of groupOrSequenceHopping = groupHopping, the group hopping is applied to the SRS sequence, whereas in the case of groupOrSequenceHopping = sequenceHopping, the sequence hopping is applied to the SRS sequence. The group hopping is, for example, group hopping based on the formula (1) described in TS 38.211 of Rel. 15. The sequence hopping is, for example, sequence hopping based on the formula (2) described in TS 38.211 of Rel. 15.

[Math. 1]

$$f_{\mathrm{gh}}\left(n^{\mu}_{\mathrm{s,f}}, l'\right) = \left(\sum_{m=0}^{7} c\left(8\left(n^{\mu}_{\mathrm{s,f}} N^{\mathrm{slot}}_{\mathrm{symb}} + l_0 + l'\right) + m\right) \cdot 2^m\right) \bmod 30 \tag{1}$$

$$\nu = 0$$

[Math. 2]

$$f_{\mathrm{gh}}\left(n^{\mu}_{\mathrm{s,f}}, l'\right) = 0$$
$$\nu = \begin{cases} c\left(n^{\mu}_{\mathrm{s,f}} N^{\mathrm{slot}}_{\mathrm{symb}} + l_0 + l'\right) & M^{\mathrm{SRS}}_{\mathrm{sc,b}} \geq 6 N^{\mathrm{RB}}_{\mathrm{sc}} \\ 0 & \text{otherwise} \end{cases} \tag{2}$$

(3) In the case where the frequency hopping is disabled (frequency hopping = disable), the UE may assume that the hopping is disabled (hopping = disable) among the symbols applied with the TD-OCC. In the condition that the parameters $b_{hop}$ and $B_{SRS}$ that are configured by higher layer signaling satisfy $b_{hop} \geq B_{SRS}$, the UE assumes that the SRS sequence is the same among the symbols applied with the TD-OCC ($f_{gh}(n^{\mu}_{s,f}, l') = 0$, v = 0).

(4) In the case where the frequency hopping is disabled (frequency hopping = disable), it is assumed that the hopping is enabled (hopping = enable) (the TD-OCC is not applied). In the condition that the parameters $b_{hop}$ and $B_{SRS}$ that are configured by higher layer signaling satisfy $b_{hop} \geq B_{SRS}$, the UE may assume that the SRS sequences differ among the consecutive symbols (for example, the hopping is performed by using the following formula (1) or (2)).

Note that, as described in the Method 1-2-3 and FIG. 3, normally, enabling or disabling of the frequency hopping is configured by the frequency hopping (freqHopping) parameters (b-hop and b-SRS) of the RRC parameters.

Herein, in the present disclosure, enabling and disabling of the hopping may be assumed as the following (1) to (3). That is, enabling/disabling of the hopping may mean enabling/disabling of hopping relating to the SRS sequence.

(1) In the case of groupOrSequenceHopping = neither, the hopping is assumed to be disabled.
(2) In the case of groupOrSequenceHopping = groupHopping, the hopping is assumed to be enabled.

(3) In the case of groupOrSequenceHopping = sequenceHopping, the hopping is assumed to be enabled.

In this manner, although application of the TD-OCC to the consecutive symbols of an SRS is configured or is assumed, the UE is able to judge whether to apply the group hopping or the sequence hopping to the consecutive symbols of the SRS, in accordance with enabling or disabling of the frequency hopping.

In addition, although application of the TD-OCC to the consecutive symbols of an SRS is configured or is assumed, the UE is able to judge whether to apply the TD-OCC to the consecutive symbols of the SRS, in accordance with enabling or disabling of the frequency hopping. Moreover, even when application of the TD-OCC to the consecutive symbols of an SRS is not configured, the UE is able to judge whether to apply the TD-OCC to the consecutive symbols of the SRS, in accordance with enabling or disabling of the frequency hopping.

The Method 2-3 enables applying the TD-OCC without having to reconfigure enabling and disabling of the frequency hopping. The Method 2-3 also enables the UE to judge enabling/disabling of the OCC based on enabling/disabling of the frequency hopping, without explicitly notifying enabling/disabling of the OCC, whereby increase in communication overhead can be suppressed.

<Third Embodiment>

In the Third Embodiment, an application example of the TD-OCC to each symbol will be described.

[Method 3-1]

In the Method 3-1, an application example of the TD-OCC to each symbol in the case where the sequence hopping is not performed among consecutive symbols, will be described.

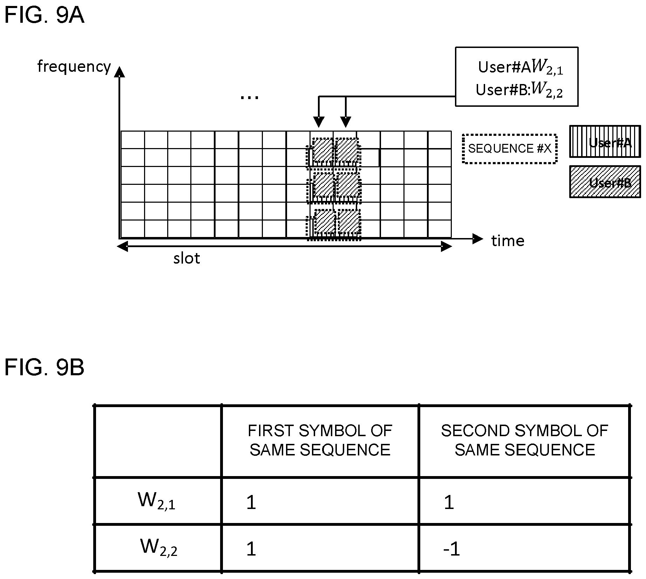

FIG. 9A is a diagram to show application of the TD-OCC in the case where the sequence hopping is not performed among consecutive symbols (the number of symbols = 2). FIG. 9B is a diagram to show configuration examples of the TD-OCC in the case where the number of symbols of a sequence is 2. As shown in FIGS. 9A and 9B, the UE assumes that the TD-OCC corresponding to the number of symbols is applied from the first symbol of the consecutive symbols of the SRS. As shown in FIGS. 9A and 9B, the same SRS sequence is multiplexed with respect to a plurality of users (two users) in the consecutive symbols. The users (users #A and #B) are applied with mutually different TD-OCCs ($W_{2,1}$ and $W_{2,2}$).

Note that, in the present disclosure, the symbol "$W_{n,m}$" may represent an m-th element of an OCC (which may be referred to as an "orthogonal code," an "orthogonal code sequence," and so on) having a code length of "n." In other words, this symbol may represent an OCC used by UE #m among "n" number of multiplexed UEs.

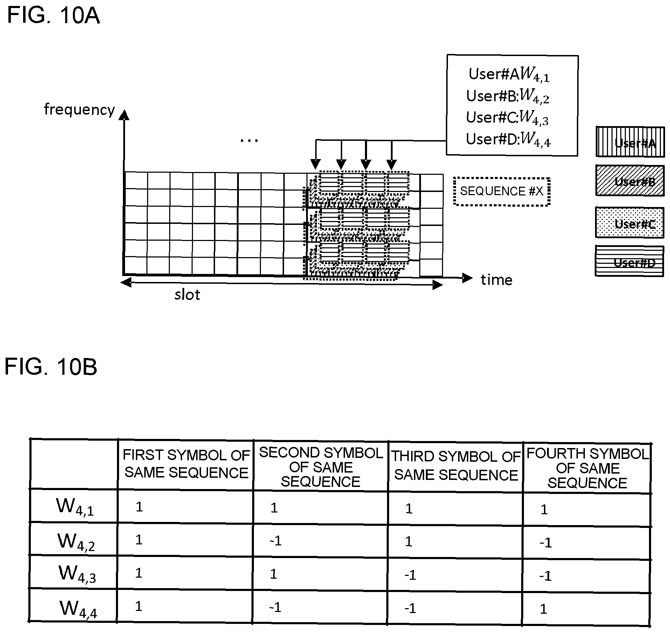

FIG. 10A is a diagram to show application of the TD-OCC in the case where the sequence hopping is not performed among consecutive symbols (the number of symbols = 4). FIG. 10B is a diagram to show configuration examples of the TD-OCC in the case where the number of symbols of a sequence is 4. As in the examples shown in FIGS. 9A and 9B, the UE assumes that the TD-OCC corresponding to the number of symbols is applied from the first symbol of the consecutive symbols of the SRS. The same SRS sequence is multiplexed with respect to a plurality of users (four users) in the consecutive symbols. The users (users #A, #B, #C, and #D) are applied with mutually different TD-OCCs ($W_{4,1}$, $W_{4,2}$, $W_{4,3}$, and $W_{4,4}$).

[Method 3-2]

In the Method 3-2, an application example of the TD-OCC to each symbol in the case where the sequence hopping is performed among consecutive symbols, will be described. The UE assumes that the TD-OCC is applied to two symbols of the same sequence, which are configured among the consecutive symbols of the SRS. The UE may assume that each same sequence is a group unit to be applied with the TD-OCC.

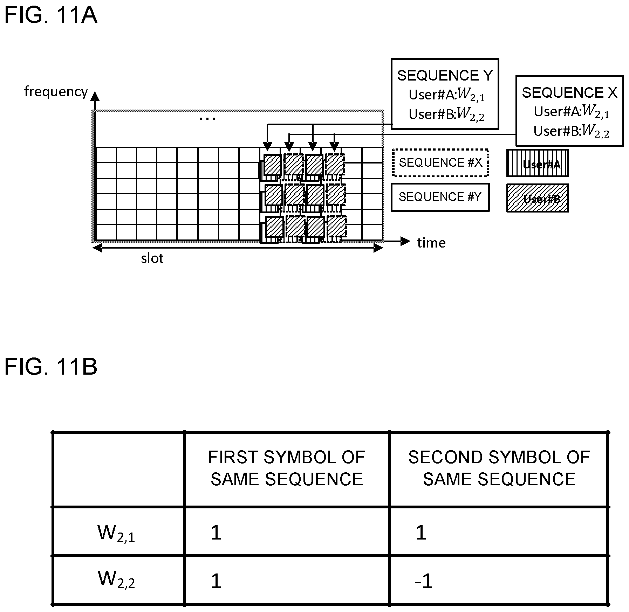

FIG. 11A is a diagram to show application of the TD-OCC in the case where the sequence hopping is performed among consecutive symbols (the number of symbols = 4). FIG. 11B is a diagram to show configuration examples of the TD-OCC index in the case where the number of symbols of a sequence is 2. As in the Method 3-1, the UE assumes that the TD-OCC corresponding to the number of symbols is applied from the first symbol of the consecutive symbols of the SRS. In the example shown in FIG. 11A, two sequences are configured to the consecutive symbols applied with the TD-OCC. That is, the sequence hopping is performed among the consecutive symbols.

The same SRS sequence is multiplexed with respect to a plurality of users (two users) in the consecutive symbols. The users (users #A and #B) are applied with mutually different TD-OCCs ($W_{2,1}$ and $W_{2,2}$) having a code length of 2.

Herein, it is assumed that the hopping is performed on the four symbols of the SRS in FIG. 11A so that the first and third symbols will correspond to sequence #Y, whereas the second and fourth symbols will correspond to sequence #X. Each UE applies the TD-OCC to the two symbols of sequence #X and to the two symbols of sequence #Y.

In these conditions user #A applies the TD-OCC by multiplying the first, second, third and fourth symbols in FIG. 11A by 1, 1, 1, and 1, respectively, based on $W_{2,1}$. On the other hand, user #B applies the TD-OCC by multiplying the first, second, third and fourth symbols in FIG. 11A by 1, 1, -1, and -1, respectively, based on $W_{2,2}$.

Note that, in the example shown in FIG. 11A in which 4OFDM symbols are used, if the consecutive symbols of each user are of the same sequence, quad multiplexing can be performed as shown in FIG. 10B, but double multiplexing is performed due to having difference sequences.

The Method 3-2 applies the TD-OCC to the symbols to which the same sequence is used, whereby capacity of the SRS can be increased.

[Method 3-3]

In the Method 3-3, the UE may assume that the TD-OCC is applied among slots, in accordance with the number of repetitions among the slots of the SRS. The UE may determine the number of repetitions among the slots of the SRS, for example, based on a periodicity value of the SRS that corresponds to SRS-PeriodicityAndOffset. The UE may judge that the TD-OCC will be applied among the slots in which the number of repetitions is 2 or larger.

In the case of multiplexing nUEs in "n" slots, UE #m may apply the TD-OCC among the slots by multiplying one symbol of one slot by one element of $W_{n,m}$. Herein, the TD-OCC is preferably applied to symbols at the same symbol positions in different slots.

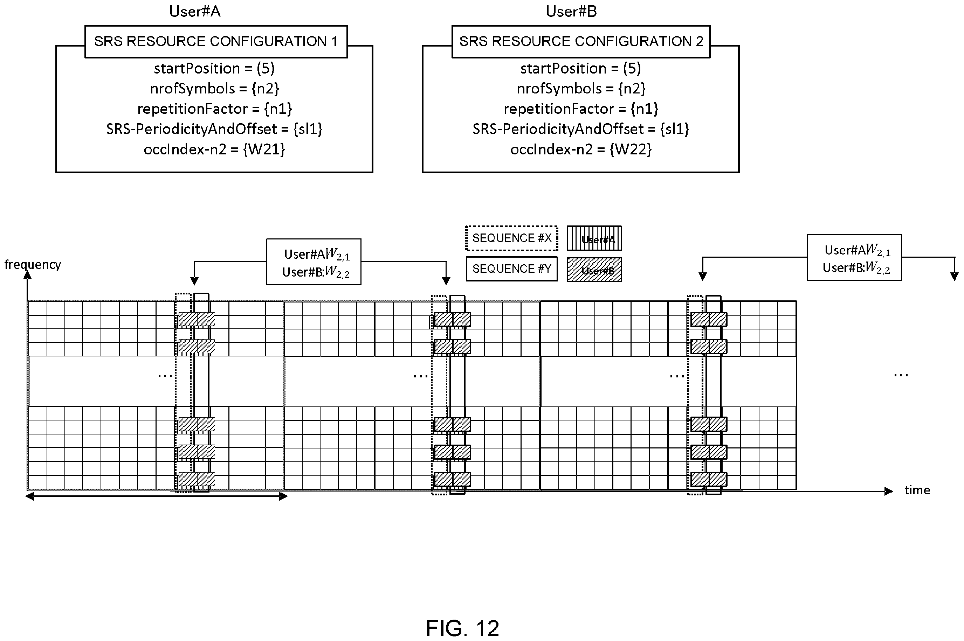

FIG. 12 is a diagram to show application of the TD-OCC among slots. In this example, it is assumed that the SRS resource configurations 1 and 2 shown in the drawing are configured to users #A and #B, respectively.

For example, the SRS resource configuration 1 includes the following configurations: start position (startPosition) = 5 (that is, start from five symbols before the last), number of symbols (nrofSymbols) of consecutive symbols = 2, SRS periodicity and offset (SRS-PeriodicityAndOffset) = sl1 (that is, each slot has an SRS resource), number of repetitions (repetitionFactor) = n1, and OCC index (occIndex-n2) = W21 (which corresponds to $W_{2,1}$ described above, and details will be described later). The SRS resource configuration 2 is the same as the SRS resource configuration 1 except for OCC index (occIndex-n2) = W22 (which corresponds to $W_{2,2}$ described above).

Moreover, in this example, it is assumed that the hopping is applied on the consecutive symbols (the number of symbols = 2) in the slot and that the sequence of the first SRS symbol is determined as sequence #X, whereas the sequence of the second SRS symbol is determined as sequence #Y, for each user (UE).

On the basis of the OCC index, each UE determines to apply multiplexing of the two UE, that is, to apply the TD-OCC between two slots. Each UE applies the TD-OCC to an i-th (i is an odd number, for example) slot and an (i + 1)-th slot, which are shown in the drawing.

For example, user #A applies the TD-OCC by multiplying the first SRS symbol in the first slot and the first SRS symbol in the second slot (each SRS symbol corresponds to sequence #X) in FIG. 12, by 1 and 1, respectively, based on $W_{2,1}$. In addition, user #A applies the TD-OCC by multiplying the second SRS symbol in the first slot and the second SRS symbol in the second slot (each SRS symbol corresponds to sequence #Y) in FIG. 12, by 1 and 1, respectively, based on $W_{2,1}$.

The Method 3-3 described above enables applying the TD-OCC by using the same SRS sequence among different slots, irrespective of whether the hopping is applied to the SRS. It is also possible to multiplex an SRS of Rel, 15 UE.

[Method 3-4]

In the Method 3-4, changing (appropriate use) between the TD-OCC among symbols in a slot (which may be simply referred to as an "intra-slot OCC," an "inter-symbol OCC," and so on) in the Methods 3-1 and 3-2, and the TD-OCC among slots (which may be simply referred to as an "inter-slot OCC") in the Method 3-3, will be described.

On the basis of higher layer signaling (such as RRC signaling or MAC CE) or physical layer signaling (such as DCI), each which shows either one of the intra-slot OCC and the inter-slot OCC, or a combination thereof, either one of the OCCs may be configured or activated to the UE.

After RRC layer signaling showing both of the intra-slot OCC and the inter-slot OCC is received, either one of the OCCs may be activated or indicated with respect to the UE, based on MAC CE or DCI.

The information showing the intra-slot OCC and the inter-slot OCC, which is notified by higher layer signaling or the like, may be referred to as "TD-OCC information," "TD-OCC type information," and so on.

The UE may assume that the TD-OCC type information is implicitly configured by another RRC parameter. For example, the UE may assume that the inter-slot OCC is applied in the case where the SRS period that is shown by SRS-PeriodicityAndOffset is larger than a certain value (Nr [slot] (for example, 1)), and otherwise, the UE may assume that the intra-slot OCC is applied. Conversely, the UE may assume that the intra-slot OCC is applied in the case where the SRS periodicity is smaller than a certain value (Nr [slot] (for example, 1)), and otherwise, the UE may assume that the inter-slot OCC is applied.

For example, the value of Nr may be configured by higher layer signaling or the like, may be derived based on another RRC parameter, or may be defined by specifications in advance.

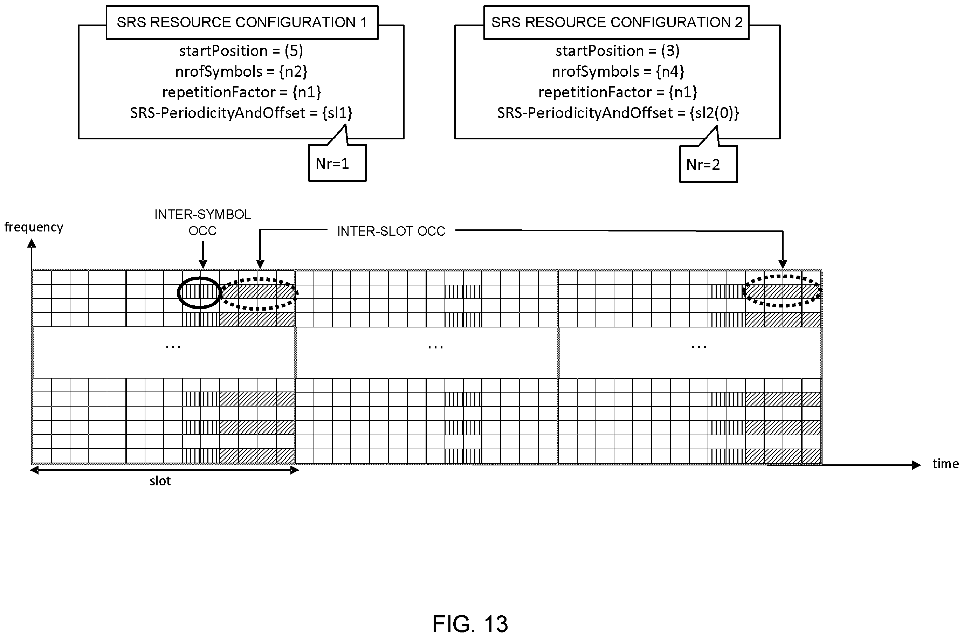

FIG. 13 is a diagram to show an example of appropriate use of the intra-slot OCC and the inter-slot. The SRS resource configurations 1 and 2 shown in FIG. 13 have mutually different SRS periodicities, and the SRS periodicity of the former corresponds to 1, whereas the SRS periodicity of the latter corresponds to 2 (offset is 0). In addition, the above-described Nr is assumed to be 1.

In these conditions, the UE to which the SRS resource configuration 1 is configured, may apply the intra-slot OCC due to the SRS periodicity being the same as Nr. On the other hand, the UE to which the SRS resource configuration 2 is configured, may apply the inter-slot OCC due to the SRS periodicity being larger than Nr.

The Method 3-4 described above enables flexible control of the OCC.

<Fourth Embodiment>

In the Fourth Embodiment, a method of configuring the TD-OCC (OCC index) by using higher layer signaling (RCC), will be described.

[Method 4-1]

In the Method 4-1, the UE assumes that an OCC index is configured per SRS resource or SRS resource set by higher layer signaling (RRC).

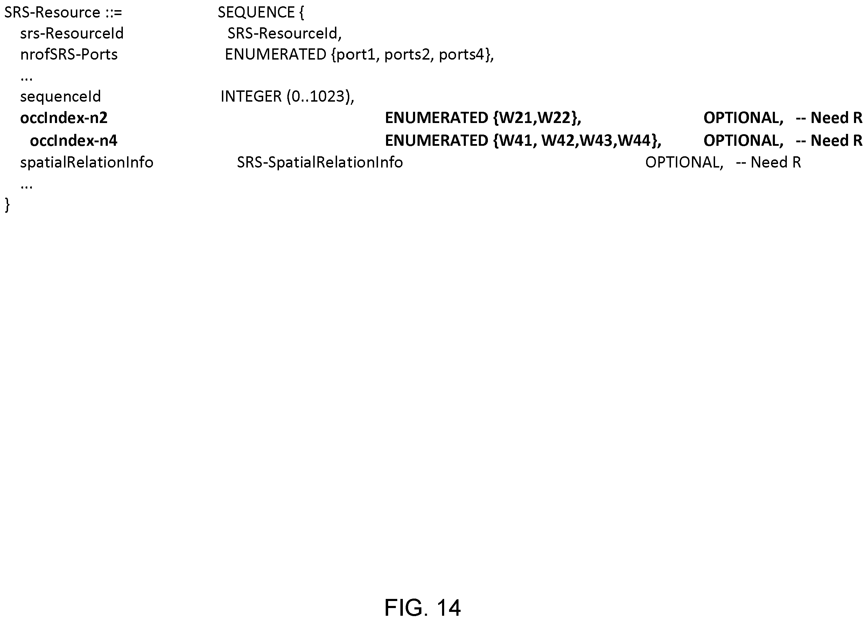

FIG. 14 is a diagram to show an example in which an OCC index is configured per SRS resource in RRC. As shown in FIG. 14, occIndex-n2 and occIndex-n4 are configured as parameters per SRS resource. Either one of candidate values of W21 and W22 is configured to occIndex-n2. Either one of candidate values of W41, W42, W43, and W44 is configured to occIndex-n4. These values (Wnm) may show $W_{n,m}$ described above.

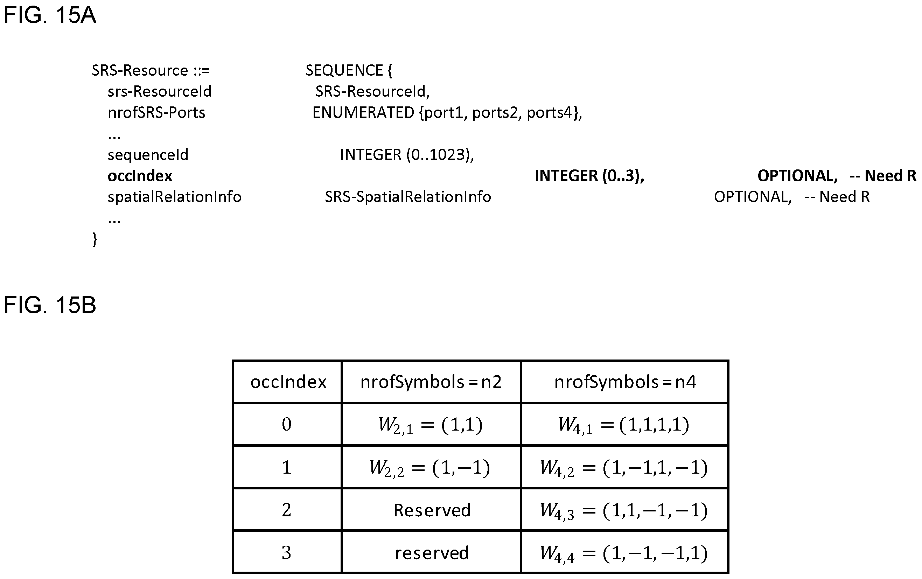

FIG. 15A is a diagram to show an example in which an OCC index per SRS resource is configured by one parameter in RRC. FIG. 15B is a diagram to show correspondence relationships between OCC indices and OCCs of symbols.

In the example shown in FIG. 15A, any one of integers from 0 to 3 is configured as an OCC index. FIG. 15B shows an OCC of each symbol corresponding to each OCC index (code point).

The correspondence relationships shown in FIG. 15B may be defined by specifications or may be configured by higher layer signaling. Note that the parameter "nrofSymbols" in FIG. 15B shows the number of consecutive symbols of the SRS or the number of symbols to be applied with the TD-OCC. As shown in FIG. 15B, the correspondence relationship between the OCC index and the OCC may be defined or configured in a different manner with respect to each value of nrofSymbols.

In the case of applying the examples in FIGS. 15A and 15B, the TD-OCC of each symbol can be shown by one parameter irrespective of the code length of the OCC (the correspondence relationship of occIndex can be interpreted in a different manner in accordance with the configured value of nrofSymbols).

Although FIGS. 14 and 15A show examples in which the OCC index is configured per SRS resource, the OCC index may be configured per SRS resource set. In addition, the examples in which the OCC index is configured as the parameter of the RRC are shown, but the OCC index may be configured by another method (such as MAC CE).

The Method 4-1 enables the NW to flexibly configure the TD-OCC.

[Method 4-2]

In the Method 4-2, the TD-OCC index may be implicitly configured by a parameter (such as a number of consecutive symbols (nrofSymbols) or a resource type (resourceType)) that is configured per SRS resource of higher layer signaling (RRC). That is, the UE may assume (determine) the TD-OCC index based on a parameter that is configured per SRS resource of higher layer signaling (RRC).

In the condition that nrofSymbols = n2 and resourceType = aperiodic, the UE may assume that the TD-OCC index is $W_{2,1}$. In the condition that nrofSymbols = n2 and resourceType is not aperiodic, the UE may assume that the TD-OCC index is $W_{2,2}$.

In the condition that nrofSymbols = n2 and resourceType = aperiodic/semi-persistent, the UE may assume that the TD-OCC index is $W_{2,1}$. In the condition that nrofSymbols = n2 and resourceType = periodic, the UE may assume that the TD-OCC index is $W_{2,2}$.

In the condition that nrofSymbols = n4 and resourceType = aperiodic, the UE may assume that the TD-OCC index is $W_{4,1}$. In the condition that nrofSymbols = n4 and resourceType = semi-persistent, the UE may assume that the TD-OCC index is $W_{4,2}$. In the condition that nrofSymbols = n4 and resourceType = periodic, the UE may assume that the TD-OCC index is $W_{4,3}$.

Note that $W_{m,n}$ corresponding to resourceType in these descriptions is merely an example, and different $W_{m,n}$ may correspond thereto.

The TD-OCC corresponding to each index may be defined by specifications, as shown in FIGS. 9B and 10B.

In the Method 4-2, the TD-OCC index is implicitly configured, whereby overhead of the RRC can be reduced.

Note that the TD-OCC index in the Fourth Embodiment may mean a TD-OCC index that is used for either one or both of the intra-slot OCC and the inter-slot OCC described above. The TD-OCC index for the inter-slot OCC and the TD-OCC index for the inter-slot OCC may be separately or commonly configured.

<Other Matters>

A table using 1 and -1, as shown in FIGS. 9B and 10B, is disclosed as an example of the TD-OCC, but cyclic shift may also be used as the example of the TD-OCC.

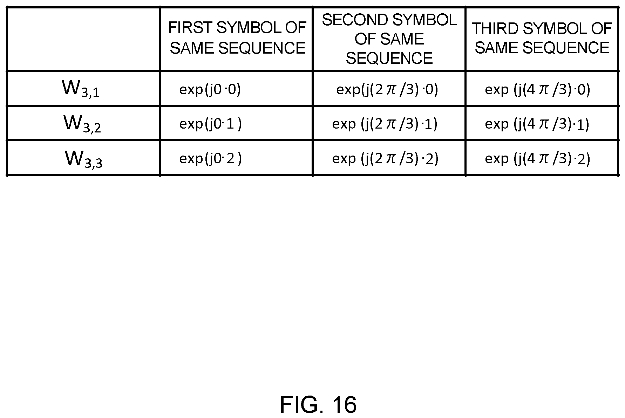

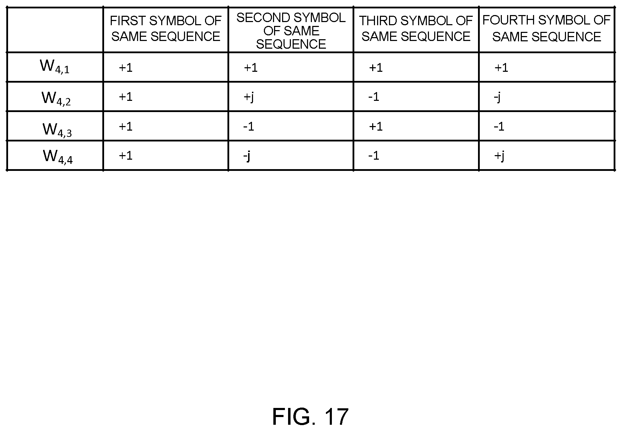

FIG. 16 is a diagram to show a first example of the cyclic shift used in the TD-OCC. FIG. 17 is a diagram to show a second example of the cyclic shift used in the TD-OCC. In FIGS. 16 and 17, the first (the leading) symbol in the same sequence may be represented as "SRS symbol = startPosition." The second symbol in the same sequence may be represented as "SRS symbol = startPosition-1." The third symbol in the same sequence may be represented as "SRS symbol = startPosition-2." The fourth symbol in the same sequence may be represented as "SRS symbol = startPosition-3."

Note that the sequence in the present disclosure may be assumed to be an SRS sequence in 3GPP Rel. 15. In addition, the sequence in the present disclosure may be a low-peak-to-average power ratio (Peak-to-Average Power Patio (PAPR)) sequence or an SRS sequence using the low-peak-to-average power ratio sequence, which are applied in DMRS in 3GPP Rel. 16.

Although the SRS of consecutive symbols is focused in each embodiment (in particular, in the First and Second Embodiments), the SRS is not limited thereto. For example, the SRS of consecutive symbols in these embodiments may be interpreted as an "SRS of non-consecutive symbols (such as an SRS of inter-slot repetition)." The SRS of non-consecutive symbols may be interpreted as the "SRS of consecutive symbols." The symbol in the present disclosure may be interpreted as other time-domains (such as a slot, a subframe, and a frame).

The embodiments described above enable the UE to appropriately configure application of the TD-OCC to the SRS, thereby suppressing reduction in SRS capacity.

(Radio Communication System)

Hereinafter, a structure of a radio communication system according to one embodiment of the present disclosure will be described. In this radio communication system, the radio communication methods according to the foregoing embodiments of the present disclosure may be used alone or may be used in combination for communication.

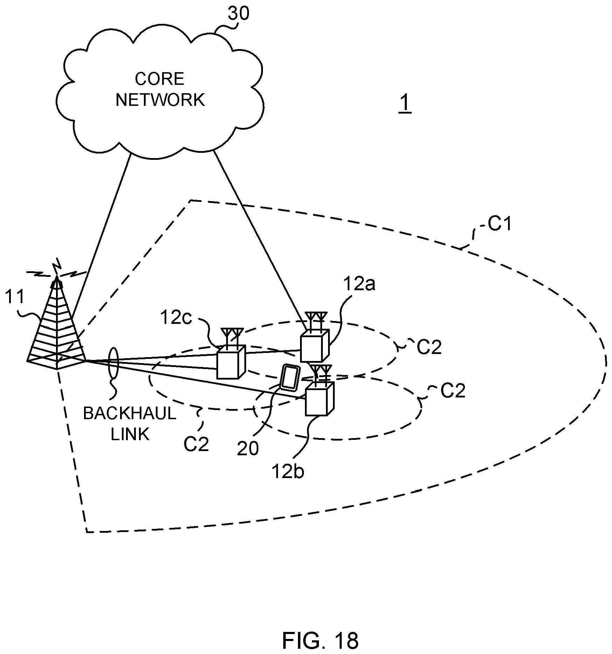

FIG. 18 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

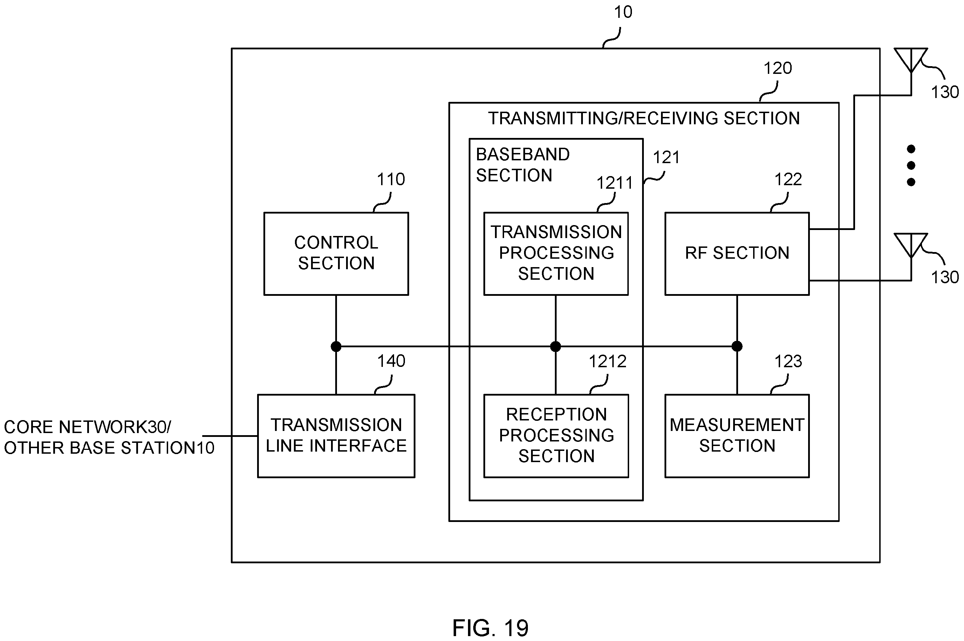

FIG. 19 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), etc., for example, on data, control information, and so on, acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that, in the case where whether the TD-OCC is enabled or disabled for the consecutive symbols of the SRS is determined, the transmitting/receiving section 120 may transmit SRS configuration information showing the determined content, to the UE. The transmitting/receiving section 120 may perform at least one of transmission processing and reception processing of the SRS based on the TD-OCC. In the case where the SRS configuration information shows that the TD-OCC is enabled, the transmitting/receiving section 120 may transmit an index of the TD-OCC by using higher layer signaling, to the UE.

The control section 110 may show whether the TD-OCC is enabled or disabled for the consecutive symbols of the SRS, based on the SRS configuration information. The control section 110 may show whether the TD-OCC is enabled or disabled, based on the configuration relating to sequence hopping, group hopping, or frequency hopping in the SRS configuration information. The control section 110 may show whether the TD-OCC is enabled or disabled, based on the number of repetitions of the SRS in a slot, in the SRS configuration information. In the case where an index of the TD-OCC is configured in the SRS configuration information, the control section 110 may show that the TD-OCC is enabled. In the case where an index of the TD-OCC is not configured in the SRS configuration information, the control section 110 may show that the TD-OCC is disabled.

In the case where the time domain orthogonal cover code TD-OCC is configured for consecutive symbols of the SRS, the control section 110 may show that the same sequence is configured to the consecutive symbols of the SRS. The control section 110 may show that the same sequence as the sequence of the symbol at a certain position is configured to each symbol of the consecutive symbols of the SRS to which the TD-OCC is configured. The control section 110 may show whether the group hopping or the sequence hopping is enabled or disabled, in accordance with enabling or disabling of the frequency hopping for each symbol of the consecutive symbols of the SRS. The control section 110 may show whether the sequence of each symbol of the consecutive symbols of the SRS is the same, based on parameters that are configured by higher layer signaling.

(User Terminal)

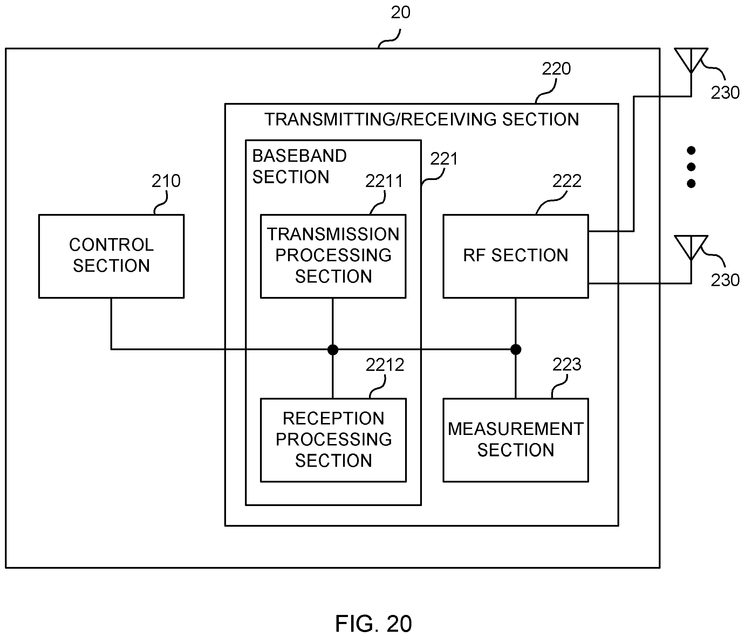

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223.

The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that, in response to determination that the TD-OCC is enabled, the transmitting/receiving section 220 may perform at least one of transmission processing and reception processing of the SRS based on the TD-OCC. In the case where the SRS configuration information shows that the TD-OCC is enabled, the transmitting/receiving section 220 may receive an index of the TD-OCC by using higher layer signaling.

The transmitting/receiving section 220 may perform at least one of transmission processing and reception processing of the SRS based on the TD-OCC.

The control section 210 may determine whether the TD-OCC is enabled or disabled for the consecutive symbols of the SRS, based on the SRS configuration information. The control section 210 may determine whether the TD-OCC is enabled or disabled, based on the configuration relating to sequence hopping, group hopping, or frequency hopping in the SRS configuration information. The control section 210 may determine whether the TD-OCC is enabled or disabled,

based on the number of repetitions of the SRS in a slot, in the SRS configuration information. In the case where an index of the TD-OCC is configured in the SRS configuration information, the control section 210 may determine the TD-OCC as being enabled. In the case where an index of the TD-OCC is not configured in the SRS configuration information, the control section 210 may determine the TD-OCC as being disabled.

In the case where the TD-OCC is configured for the consecutive symbols of the SRS, the control section 210 may assume that the same sequence is configured to the consecutive symbols of the SRS. The control section 210 may assume that the same sequence as the sequence of the symbol at a certain position is configured to each symbol of the consecutive symbols of the SRS to which the TD-OCC is configured. The control section 210 may assume whether the group hopping or the sequence hopping is enabled or disabled, in accordance with enabling or disabling of the frequency hopping for each symbol of the consecutive symbols of the SRS. The control section 210 may assume whether the sequence of each symbol of the consecutive symbols of the SRS is the same, based on parameters that are configured by higher layer signaling.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

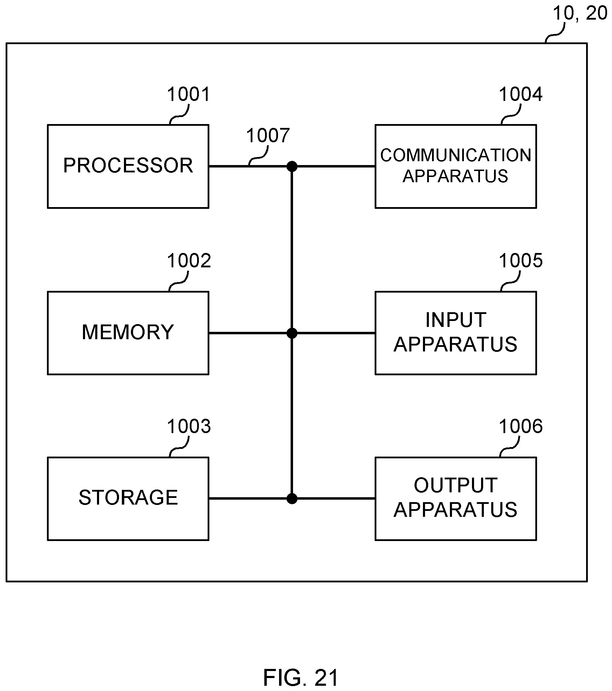

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that assumes that, in a case where time domain orthogonal cover code (TD-OCC) is configured for consecutive symbols of a sounding reference signal (SRS), the same sequence is configured to the consecutive symbols of the SRS; and
   a transmitting and/or receiving section that performs at least one of transmission processing and reception processing of the SRS, based on the TD-OCC.

2. The terminal according to claim 1, wherein
   the control section assumes that the same sequence as a sequence of a symbol at a certain position is configured to each symbol of the consecutive symbols of the SRS to which the TD-OCC is configured.

3. The terminal according to claim 1 or 2, wherein
   the control section assumes whether group hopping or sequence hopping is enabled or disabled, in accordance with enabling or disabling of frequency hopping for each symbol of the consecutive symbols of the SRS.

4. The terminal according to any one of claims 1 to 3, wherein
   the control section assumes whether a sequence of each symbol of the consecutive symbols of the SRS is the same, based on a parameter that is configured by higher layer signaling.

5. A radio communication method of a terminal, the radio communication method comprising the steps of:

   assuming that, in a case where time domain orthogonal cover code (TD-OCC) is configured for consecutive symbols of a sounding reference signal (SRS), the same sequence is configured to the consecutive symbols of the SRS; and
   performing at least one of transmission processing and reception processing of the SRS, based on the TD-OCC.

```
SRS-Resource ::=    SEQUENCE {
    srs-ResourceId      SRS-ResourceId,
    ...
    occ                 ENUMERATED {enable, disable},    OPTIONAL,  -- Need R
    ...
}
```

FIG. 1

```
SRS-ResourceSet ::=          SEQUENCE {
    srs-ResourceSetId          SRS-ResourceSetId,
        ...
    occ                        ENUMERATED {enable, disable},          OPTIONAL,   -- Need R
        ...
}
```

FIG. 2

```
freqHopping                    SEQUENCE {
    c-SRS                      INTEGER (0..63),
    b-SRS                      INTEGER (0..3),
    b-hop                       INTEGER (0..3)
},
groupOrSequenceHopping              ENUMERATED { neither, groupHopping, sequenceHopping },
```

EP 4 080 796 A1

FIG. 3

FIG. 4

FIG. 5

FIG. 6

FIG. 7

FIG. 8

## FIG. 9A

## FIG. 9B

| | FIRST SYMBOL OF SAME SEQUENCE | SECOND SYMBOL OF SAME SEQUENCE |
|---|---|---|
| $W_{2,1}$ | 1 | 1 |
| $W_{2,2}$ | 1 | -1 |

## FIG. 10A

## FIG. 10B

| | FIRST SYMBOL OF SAME SEQUENCE | SECOND SYMBOL OF SAME SEQUENCE | THIRD SYMBOL OF SAME SEQUENCE | FOURTH SYMBOL OF SAME SEQUENCE |
|---|---|---|---|---|
| $W_{4,1}$ | 1 | 1 | 1 | 1 |
| $W_{4,2}$ | 1 | -1 | 1 | -1 |
| $W_{4,3}$ | 1 | 1 | -1 | -1 |
| $W_{4,4}$ | 1 | -1 | -1 | 1 |

FIG. 11A

FIG. 11B

| | FIRST SYMBOL OF SAME SEQUENCE | SECOND SYMBOL OF SAME SEQUENCE |
|---|---|---|
| $W_{2,1}$ | 1 | 1 |
| $W_{2,2}$ | 1 | -1 |

User#A

SRS RESOURCE CONFIGURATION 1

startPosition = (5)
nrofSymbols = {n2}
repetitionFactor = {n1}
SRS-PeriodicityAndOffset = {sl1}
occIndex-n2 = {W21}

User#B

SRS RESOURCE CONFIGURATION 2

startPosition = (5)
nrofSymbols = {n2}
repetitionFactor = {n1}
SRS-PeriodicityAndOffset = {sl1}
occIndex-n2 = {W22}

SEQUENCE #X    User#A

SEQUENCE #Y    User#B

User#A$W_{2,1}$
User#B:$W_{2,2}$

User#A$W_{2,1}$
User#B:$W_{2,2}$

frequency

time

FIG. 12

FIG. 13

```
SRS-Resource ::=                SEQUENCE {
   srs-ResourceId                 SRS-ResourceId,
   nrofSRS-Ports                  ENUMERATED {port1, ports2, ports4},
   ...
   sequenceId                    INTEGER (0..1023),
   occIndex-n2                                       ENUMERATED {W21,W22},              OPTIONAL,  -- Need R
    occIndex-n4                                      ENUMERATED {W41, W42,W43,W44},      OPTIONAL,  -- Need R
   spatialRelationInfo            SRS-SpatialRelationInfo                               OPTIONAL,  -- Need R
   ...
}
```

<div align="center">

FIG. 14

</div>

EP 4 080 796 A1

## FIG. 15A

```
SRS-Resource ::=              SEQUENCE {
    srs-ResourceId              SRS-ResourceId,
    nrofSRS-Ports               ENUMERATED {port1, ports2, ports4},
    ...
    sequenceId                      INTEGER (0..1023),
    occIndex                                        INTEGER (0..3),          OPTIONAL,  -- Need R
    spatialRelationInfo         SRS-SpatialRelationInfo          OPTIONAL,  -- Need R
    ...
}
```

## FIG. 15B

| occIndex | nrofSymbols = n2 | nrofSymbols = n4 |
|----------|------------------|------------------|
| 0 | $W_{2,1} = (1,1)$ | $W_{4,1} = (1,1,1,1)$ |
| 1 | $W_{2,2} = (1,-1)$ | $W_{4,2} = (1,-1,1,-1)$ |
| 2 | Reserved | $W_{4,3} = (1,1,-1,-1)$ |
| 3 | reserved | $W_{4,4} = (1,-1,-1,1)$ |

EP 4 080 796 A1

| | FIRST SYMBOL OF SAME SEQUENCE | SECOND SYMBOL OF SAME SEQUENCE | THIRD SYMBOL OF SAME SEQUENCE |
|---|---|---|---|
| $W_{3,1}$ | $\exp(j0 \cdot 0)$ | $\exp(j(2\pi/3) \cdot 0)$ | $\exp(j(4\pi/3) \cdot 0)$ |
| $W_{3,2}$ | $\exp(j0 \cdot 1)$ | $\exp(j(2\pi/3) \cdot 1)$ | $\exp(j(4\pi/3) \cdot 1)$ |
| $W_{3,3}$ | $\exp(j0 \cdot 2)$ | $\exp(j(2\pi/3) \cdot 2)$ | $\exp(j(4\pi/3) \cdot 2)$ |

FIG. 16

| | FIRST SYMBOL OF SAME SEQUENCE | SECOND SYMBOL OF SAME SEQUENCE | THIRD SYMBOL OF SAME SEQUENCE | FOURTH SYMBOL OF SAME SEQUENCE |
|---|---|---|---|---|
| $W_{4,1}$ | +1 | +1 | +1 | +1 |
| $W_{4,2}$ | +1 | +j | -1 | -j |
| $W_{4,3}$ | +1 | -1 | +1 | -1 |
| $W_{4,4}$ | +1 | -j | -1 | +j |

FIG. 17

FIG. 18

FIG. 19

EP 4 080 796 A1

FIG. 20

20

230

230

220 TRANSMITTING/RECEIVING SECTION

222 RF SECTION

223 MEASUREMENT SECTION

221 BASEBAND SECTION

2211 TRANSMISSION PROCESSING SECTION

2212 RECEPTION PROCESSING SECTION

210 CONTROL SECTION

FIG. 21

## INTERNATIONAL SEARCH REPORT

International application No.

PCT/JP2019/050220

### A. CLASSIFICATION OF SUBJECT MATTER
Int. Cl. H04J13/18(2011.01)i, H04L27/26(2006.01)i
FI: H04L27/26 114, H04J13/18

According to International Patent Classification (IPC) or to both national classification and IPC

### B. FIELDS SEARCHED
Minimum documentation searched (classification system followed by classification symbols)
Int. Cl. H04J13/18, H04L27/26

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
3GPP

### C. DOCUMENTS CONSIDERED TO BE RELEVANT

| Category* | Citation of document, with indication, where appropriate, of the relevant passages | Relevant to claim No. |
|---|---|---|
| A | QUALCOMM INCORPORATED, Additional SRS symbols[online], 3GPP TSG RAN WG1 #95 R1-1813052, 03 November 2018, [retrieved on 30 January 2020], retrieved from the Internet <URL: http://www.3gpp.org/ftp/tsg_ran/WG1_RL1/TSGR1_95/Does/R1-1813052.zip>, in particular, section 2.5 | 1-5 |
| A | HUAWEI, Remaining issues on SRS for NR positioning [online], 3GPP TSG RAN Meeting WG1 #99 R1-1911897, 09 November 2019, [retrieved on 30 January 2020], retrieved from the Internet <URL: http://www.3gpp.org/ftp/TSG_RAN/WG1_RL1/TSGR1_99/Does/R1-1911897.zip>, in particular, section 2 | 1-5 |

☒ Further documents are listed in the continuation of Box C.　　☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 30.01.2020 | 10.02.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 4 080 796 A1**

<table>
<tr><td colspan="2" align="center">INTERNATIONAL SEARCH REPORT</td><td colspan="2">International application No.<br>PCT/JP2019/050220</td></tr>
<tr><td colspan="4">C (Continuation).    DOCUMENTS CONSIDERED TO BE RELEVANT</td></tr>
<tr><td>Category*</td><td>Citation of document, with indication, where appropriate, of the relevant passages</td><td colspan="2">Relevant to claim No.</td></tr>
<tr><td>A</td><td>PANTECH, Further consideration on Aperiodic SRS solutions [online], 3GPP TSG RAN WG1 #61 R1-102840, 04 May 2010, [retrieved on 30 January 2020], retrieved from the Internet <URL: http://www.3gpp.org/ftp/tsg_ran/WG1_RL1/TSGR1_61/Does/R1-102840.zip>, in particular, section 3</td><td colspan="2">1-5</td></tr>
<tr><td>A</td><td>JP 2014-527354 A (LG ELECTRONICS INC.) 09 October 2014, paragraph [0115]</td><td colspan="2">1-5</td></tr>
<tr><td>A</td><td>US 2017/0366377 A1 (SAMSUNG ELECTRONICS CO., LTD.) 21 December 2017, paragraph [0190], fig. 17</td><td colspan="2">1-5</td></tr>
<tr><td>A</td><td>US 2017/0048717 A1 (SAMSUNG ELECTRONICS CO., LTD.) 16 February 2017, paragraphs [0079], [0080], fig. 7</td><td colspan="2">1-5</td></tr>
<tr><td>A</td><td>WO 2018/126474 A1 (QUALCOMM INCORPORATED) 12 July 2018, paragraphs [0109], [0113], fig. 15, 17</td><td colspan="2">1-5</td></tr>
</table>

Form PCT/ISA/210 (continuation of second sheet) (January 2015)

International application No.

PCT/JP2019/050220

| Patent Documents referred to in the Report | Publication Date | Patent Family | Publication Date |
|---|---|---|---|
| JP 2014-527354 A | 09.10.2014 | US 2014/0211736 A1 paragraph [0108] WO 2013/025054 A2 EP 2747320 A2 KR 10-2014-0044393 A CN 10385838 A | |
| US 2017/0366377 A1 | 21.12.2017 | WO 2017/217805 A1 KR 10-2019-0009744 A CN 109417453 A | |
| US 2017/0048717 A1 | 16.02.2017 | WO 2017/026857 A1 KR 10-2017-0020285 A CN 107925544 A | |
| WO 2018/126474 A1 | 12.07.2018 | WO 2018/127171 A1 CN 110168954 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010